# EUROPÄISCHE PATENTANMELDUNG

(11) **EP 4 001 209 A1**
(43) Veröffentlichungstag der Anmeldung: **25.05.2022**
(21) Anmeldenummer: 21206612.0
(22) Anmeldetag: 05.11.2021
(51) Int. Cl.: B67C 7/00

(54) **ABFÜLLANLAGE FÜR FLÜSSIGE PRODUKTE UND VERFAHREN ZUR ABFÜLLUNG FLÜSSIGER PRODUKTE IN FLASCHEN**

(30) Priorität: 19.11.2020 DE 102020130535
(71) Anmelder: Krones AG, 93073 Neutraubling (DE)
(72) Erfinder: BAUER, Sascha, 93073 Neutraubling (DE); HOLZER, Christian, 93073 Neutraubling (DE); LANDLER, Bruno, 93073 Neutraubling (DE); STOIBER, Christian, 93073 Neutraubling (DE); LAUTENSCHLAGER, Franz, 93073 Neutraubling (DE); SENN, Konrad, 93073 Neutraubling (DE); BAUER, Johannes, 93073 Neutraubling (DE); POESCHL, Stefan, 93073 Neutraubling (DE); SCHEIDLER, Ludwig, 93073 Neutraubling (DE); KOLLER, Juergen, 93073 Neutraubling (DE)
(74) Vertreter: Grünecker Patent- und Rechtsanwälte PartG mbB

(57) **Zusammenfassung**

Beschrieben werden eine Abfüllanlage (1) für flüssige Produkte und ein Verfahren zur Abfüllung der Produkte in Flaschen. Die Abfüllanlage umfasst einen Maschinenblock (2) mit einer Blasmaschine (3) zur Herstellung von Flaschen und zu deren Bereitstellung als Flaschenstrom (8), mit einer nachgeschalteten Etikettiermaschine (4) zur Etikettierung des Flaschenstroms, mit wenigstens einem ersten und zweiten Transportstrang (9a, 10a) umfassend je eine Füllmaschine (5, 6) zum Befüllen der Flaschen, und mit einer Verteileinheit (7) zur Aufteilung des etikettierten Flaschenstroms auf die Transportstränge bei Transportvollbesetzung derart, dass die Flaschen an allen umlaufenden Etikettierpositionen (4a) der Etikettiermaschine etikettiert und gleichzeitig an allen umlaufenden Füllpositionen (5a, 6a) der Füllmaschinen befüllt werden können. Ferner umfasst die Abfüllanlage den Füllmaschinen jeweils nachgeschaltete Auslauftransporteure mit einer Zusammenführeinrichtung (33) zum Zusammenführen der Transportstränge zu einem gemeinsamen Auslauf für den Flaschenstrom. Damit lässt sich die Transportgeschwindigkeit beim Befüllen und bei der anschließenden Handhabung der Flaschen gegenüber einer einzigen Füllmaschine reduzieren und Probleme aufgrund eines Überschwappens des Produkts in den Flaschen, beim Verschließen und beim anschließenden Auslauf der Flaschen reduzieren.

## Beschreibung

Die Erfindung betrifft eine Abfüllanlage für flüssige Produkte, insbesondere Getränke, und ein Verfahren zur Abfüllung der flüssigen Produkte in Flaschen.

Flüssige Produkte, wie beispielsweise Getränke, werden zunehmend in Abfüllanlagen abgefüllt, bei denen die einzelnen Herstellungseinheiten, Behandlungseinheiten und Inspektionseinheiten ausschließlich mittels Transfersternen oder dergleichen Transportmittel mit umlaufenden Transporttaschen und/oder Haltern verbunden sind. Eine transporttechnisch derart verblockte Maschinenkombination wird üblicherweise als Maschinenblock bezeichnet. Ein derartiger Maschinenblock ist beispielsweise aus der DE 20 2009 019 170 bekannt.

Um gegebenenfalls auch unterschiedliche Behälter und/oder unterschiedliche Produkte gleichzeitig verarbeiten zu können, ist es aus der DE 10 2016 110 016 und der FR 3 070 970 zudem bekannt, einen Behälterstrom unmittelbar hinter einer Blasmaschine in zwei Transportstränge aufzuteilen und diese zwei nachgeschalteten Füllmaschinen zuzuführen. Gemäß der FR 3 070 970 können die Behälter an einem Umschaltstern abwechselnd einer ersten und zweiten Füllmaschine zugeführt werden, um die Behälter optional an beiden Füllmaschinen mit demselben Produkt zu befüllen. Bei der DE 10 2016 110 016 erfolgt der Transport der Behälter in den Transportsträngen mittels eines Förderbands bis zur jeweiligen Füllmaschine. Zusätzlich können in den Transportsträngen Etikettiermaschinen angeordnet sein.

Neben einer Flexibilisierung von Abfüllprozesses wird zunehmend auch eine Steigerung der Anlagenleistung, also der pro Zeiteinheit abfüllbaren Behälter, gefordert. Als limitierend hat sich hierbei nicht nur der physikalisch bedingt nicht beliebig verkürzbare Füllprozess erwiesen, sondern auch die unmittelbar anschließende Handhabung der befüllten Behälter. Es hat sich herausgestellt, dass das eingefüllte Produkt mit zunehmender Transportgeschwindigkeit bei Richtungswechseln überschwappen kann. Zudem wird der Verschließprozess aufgrund der hohen Umfangsgeschwindigkeiten des Systems unsicherer. Auch ist das Zuführen von Verschlusskappen bei entsprechend schnellen Verschließvorgängen problematisch.

Auch wäre es wünschenswert, den Auslauf der verschlossenen Behälter auf anschließenden Auslaufbändern kompakter auszubilden, da diese eingangsseitig lange geradlinige Abschnitte aufweisen müssen, um die Flaschen beispielsweise für ein gegebenenfalls nötiges Ausleiten nicht ordnungsgemäß hergestellter Flaschen abzubremsen.

Es besteht daher Bedarf für Abfüllanlagen und Verfahren zur Abfüllung flüssiger Produkte, bei denen die Flaschen in einem Maschinenblock hergestellt und abgefüllt werden können und wenigstens eines der oben genannten Probleme abgemildert oder ganz beseitigt werden kann. Zusätzlich ist es wünschenswert, bei einer derartigen Abfüllung Produktverluste aufgrund von Betriebsstörungen zu minimieren und eine möglichst einfache und flexible Bedienung und Steuerung der Abfüllanlage und des Verfahrens zu ermöglichen.

Die gestellte Aufgabe wird mit einer Abfüllanlage gemäß Anspruch 1 gelöst. Demnach dient diese zur Abfüllung flüssiger Produkte, insbesondere Getränke, in Flaschen oder der gleichen Behälter. Die Abfüllanlage umfasst zu diesem Zweck einen Maschinenblock, bei dem die einzelnen Herstellungseinheiten, Behandlungseinheiten und/oder Inspektionseinheiten mittels sternförmiger Transportmittel, wie beispielsweise Transfersternen, transporttechnisch miteinander verblockt verbunden sind.

Der Maschinenblock umfasst eine Blasmaschine zur Herstellung von Flaschen und zu deren Bereitstellung als einspuriger Flaschenstrom, eine nachgeschaltete Etikettiermaschine zur Etikettierung des Flaschenstroms, wenigstens einen ersten und zweiten Transportstrang mit je einer Füllmaschine zum Befüllen der Flaschen, und eine Verteileinheit zur Aufteilung des etikettierten Flaschenstroms auf die Transportstränge bei Transportvollbesetzung derart, dass die Flaschen an allen umlaufenden Etikettierpositionen der Etikettiermaschine etikettiert und gleichzeitig an allen umlaufenden Füllpositionen der Füllmaschine befüllt werden können.

Mit dem Begriff "alle umlaufenden Etikettierpositionen der Etikettiermaschine" ist gemeint, dass die Etikettierpositionen im Regelbetrieb voll besetzt sind. Das bedeutet, dass auch einzelne, insbesondere fehlerhafte Behälter, ausgeschleust werden können, die z.B. im Blasvorgang Mängel aufweisen. Auch ein mehr oder weniger regelmäßiges Ausschleusen einzelner Preforms oder Behälter im Flaschenstrom bis hin zur Aufteilung auf den wenigstens einen ersten und zweiten Transportstrang, zum Zwecke der Lückenerzeugung, wobei die Lücke auf eine stromabwärtige fehlerhafte Behandlungsposition (beispielsweise im Füller oder Verschließer) trifft, fällt unter diesen Begriff. Derartige Behälter können insbesondere vor der Etikettiermaschine ausgeschleust werden, so dass entsprechende Lücken durch die Etikettiermaschine fahren. Diese Lücken werden dann im weiteren Transportstrom mitgefahren. Es ist aber auch denkbar - insbesondere, wenn nur sehr wenige Lücken im Transportstrom vorhanden sind - dass eine im Transportstrom vor den beiden Füllmaschinen entstandene Lücke in der Verteileinrichtung vor den Füllmaschinen aufgeholt wird, sodass ein Lückenschluss vorgenommen wird. Dies ist selbstverständlich nur dann angebracht, wenn die Lücke nicht erzeugt wurde, um bewusst auf eine fehlerhafte Behandlungsposition im Füller oder Verschließer zu treffen. Der Lückenschluss käme beispielsweise dann in Frage, wenn eine Lücke durch einen defekten Behälter entstanden ist, der nach der Blasmaschine erkannt und ausgeschleust wurde.

Die Abfüllanlage umfasst ferner den Füllmaschinen jeweils nachgeschaltete Auslauftransporteure mit einer Zusammenführeinrichtung zum Zusammenführen der Transportstränge zu einem gemeinsamen Auslauf für den befüllten Flaschenstrom. Die Auslauftransporteure und/ oder die Zusammenführeinrichtung können Bestandteil des Maschinenblocks sein oder als daran angeschlossene Einheiten mit grundlegend eigenständiger Funktion ausgebildet sein.

Der Maschinenblock kann auch aus einer Blasmaschine zur Herstellung von Flaschen und zu deren Bereitstellung als einspuriger Flaschenstrom, einer Verteileinheit zur Aufteilung des einspurigen Flaschenstroms auf einen ersten und zweiten Transportstrang mit je einer Füllmaschine zum Befüllen der Flaschen bestehen. Ein Etikettieren der Flaschen würde dann im Nachgang stattfinden, wenn die Flaschen den Maschinenblock verlassen haben und der Etikettiermaschine oder mehreren Etikettiermaschinen mittels Transporteuren zugeführt werden.

Dadurch, dass der Flaschenstrom erst nach seiner Etikettierung auf die Transportstränge aufgeteilt wird, kann der apparative Aufwand für die einspurige Herstellung und Etikettierung der Flaschen stromaufwärts der Verteileinheit minimiert werden. Gleichzeitig kann die Transportgeschwindigkeit in den Transportsträngen gegenüber dem einspurigen Flaschenstrom reduziert werden, wodurch die Füllprozesse an vergleichsweise kleinen Füllmaschinen mit entsprechend geringem Platzbedarf durchgeführt werden können und ein Überschwappen des eingefüllten Produkts vermieden werden kann. Zudem ist die Zuführung von Verschlusskappen für das anschließende Verschließen zuverlässiger möglich, sowie der Verschließprozess an sich stabiler. Auch kann die Auslaufgeschwindigkeit auf den Auslauftransporteuren gegenüber der Transportgeschwindigkeit des einspurigen Flaschenstroms insgesamt reduziert werden. Dies erleichtert das Ausleiten nicht ordnungsgemäß befüllter und/oder verschlossener Behälter oder allgemein für Servicezwecke. Insgesamt wirkt sich das Prinzip nicht nur positiv auf den Betrieb der Anlage beim Kunden, sondern auch in der Inbetriebnahme und Einstellung der Maschinen auf der Baustelle aus.

Unter einer Transportvollbesetzung ist zu verstehen, dass die Flaschen ohne Auslassen von Transportpositionen und Behandlungspositionen von der Blasmaschine bis einschließlich zu den Füllmaschinen transportiert werden können. Allerdings können einzelne Transportpositionen und Behandlungspositionen insbesondere dann gezielt freigelassen werden, wenn eine Betriebsstörung beispielsweise an einer der Füllmaschinen vorliegt. Ein gezieltes Auslassen von Transportpositionen und Behandlungspositionen ist beispielsweise möglich, indem Flaschen aus dem einspurigen Flaschenstrom oder aus dem daraus gebildeten Teilstrom eines Transportstrangs ausgeleitet werden, oder indem beispielsweise nur jede zweite umlaufende Blasposition / Blasform der Blasmaschine mit einem Vorformling bestückt wird.

Die Zusammenführeinrichtung ermöglicht eine Kapazitätserhöhung durch Parallelschaltung der Füllmaschinen bei Abfüllung desselben Produkts in beiden Füllmaschinen. Die auf gleiche Weise abgefüllten Flaschen können dann als einheitlicher Flaschenstrom auslaufen. Hierbei kann der Platzbedarf für die Füllmaschinen und den Flaschenauslauf vergleichsweise geringgehalten werden.

Vorzugsweise umfasst die Abfüllanlage ferner eine Umgehungseinrichtung zum selektiven Umgehen oder Inhibieren der Zusammenführeinrichtung, um getrennte Ausläufe für die Transportstränge bereitzustellen. Damit können die Flaschen bei einer Abfüllung unterschiedlicher Produkte in den einzelnen Füllmaschinen sortiert im Auslauf bereitgestellt werden. Die Abfüllanlage lässt sich dann flexibel sowohl für die Abfüllung eines einheitlichen Produkts in allen Füllmaschinen als auch für die gleichzeitige Abfüllung unterschiedlicher Produkte einsetzen.

Vorzugsweise umfasst die Verteileinrichtung einen Aufteilstern zur abwechselnden Übergabe jeder zweiten Flasche des Flaschenstroms an den ersten und zweiten Transportstrang.

Vorzugsweise umfasst der Aufteilstern mittels daran umlaufender Betätigungselemente und zugeordneter stationärer Betätigungselemente aktiv zu öffnende Klammern. Die dem ersten Transportstrang zugeordneten Betätigungselemente sind dann auf einer ersten gemeinsamen Betätigungsebene und die dem zweiten Transportstrang zugeordneten Betätigungselemente auf einer zweiten gemeinsamen Betätigungsebene oberhalb oder unterhalb der ersten Betätigungsebene angeordnet. Die Betätigungselemente sind dann so angeordnet, dass sie sich bezüglich der Betätigungsebenen voneinander unabhängig betätigen lassen.

Anders gesagt wirkt das stationäre Betätigungselement der ersten Betätigungsebene nur mit den umlaufenden Betätigungselementen der ersten Betätigungsebene zusammen und das stationäre Betätigungselement der zweiten Betätigungsebene nur mit den umlaufenden Betätigungselementen der zweiten Betätigungsebene. Dies ermöglicht eine platzsparende und einfach zu konstruierende Stromaufteilung durch selektives Öffnen der Klammern entweder an einem ersten Übergabepunkt zum ersten Transportstrang oder an einem zweiten Übergabepunkt zum zweiten Transportstrang.

Die umlaufenden Betätigungselemente sind beispielsweise um vertikale Achsen drehbare Drehriegel. Die stationären Betätigungselemente sind beispielsweise als Betätigungsnocken ausgebildet, die durch Kollision mit den Drehriegeln diese um die vertikalen Achsen drehen, um die Klammen zu betätigen. Dies ist von Transfersternen prinzipiell für eine Betätigung in einer einzigen Betätigungsebene prinzipiell bekannt.

Prinzipiell denkbar wären auch Aufteilsterne anderer Bauart, beispielsweise ein Umschaltstern mit einer umschaltbaren Steuerkurve, ein Schiebestern mit radial verschiebbaren Klammern, ein Transferstern mit einem umfänglich verlaufenden Linearmotorsystem für einzelne Klammern oder dergleichen.

Vorzugsweise umfassen die Transportstränge jeweils wenigstens einen Teilungsverzugsstern zur Reduzierung einer ersten Transportteilung bei/unmittelbar vor der Aufteilung des Flaschenstroms auf eine dem gegenüber kleinere zweite Transportteilung beim Befüllen der Flaschen.

Der Teilungsverzugsstern ist dann vorzugsweise unmittelbar im Anschluss an den Aufteilstern angeordnet, nimmt also von diesem die Flaschen entgegen und ändert dann bei weiterer Drehung um sich selbst die erste Transportteilung und stellt dabei insbesondere die zweite Transportteilung her.

Ein Teilungsverzugsstern kann prinzipiell als ein Umschaltstern mit einer umschaltbaren Steuerkurve, ein Schiebestern mit radial verschiebbaren Klammern, ein Transferstern mit einem umfänglich verlaufenden Linearmotorsystem für einzelne Klammern ausgebildet sein.

Dadurch wird eine vergleichsweise kompakte Aufteilung des Flaschenstroms bei gleichzeitiger Anpassung der Transportteilung und bei vergleichsweise hohen Transportgeschwindigkeiten ermöglicht. Die Transportteilung wird hierbei unter Einhaltung einer Vereinzelung der Behälter, also im Abstand zueinander, angepasst.

Vorzugsweise umfasst der Maschinenblock ferner einen zwischen Blasmaschine und Etikettiermaschine infolge maschineller Steuerung wahlweise abzweigenden Flaschenpuffer für den einspurigen Flaschenstrom und/oder eine jeweils zwischen Verteileinrichtung und Füllmaschine infolge maschineller Steuerung wahlweise abzweigende Ausleiteinrichtung für die Transportstränge.

Bei einer Betriebsstörung einer der Füllmaschinen können die dieser zugeordneten Flaschen somit vor der Etikettierung zwischengespeichert (gepuffert) und/oder nach der Etikettierung ausgeleitet werden. Dies ermöglicht die Aufrechterhaltung des Abfüllbetriebs in der wenigstens einen ordnungsgemäß arbeitenden Füllmaschine. Zudem können derart gepufferte Flaschen bei Wiederaufnahme des Abfüllbetriebs in den einspurigen Flaschenstrom eingeschleust werden. Dadurch lässt sich insgesamt der Produktverlust infolge von Betriebsstörungen an einzelnen Füllmaschinen reduzieren.

Vorzugsweise umfasst der Maschinenblock ferner wenigstens eine an der Verteileinrichtung oder zwischen dieser und einer der Füllmaschinen angeordnete Ausleiteinrichtung, die derart ausgebildet und maschinell gesteuert ist, dass der einen oder anderen Füllmaschine zugeordnete Flaschen jeweils selektiv ausgeleitet werden können. Die Ausleiteinrichtung ist beispielsweise am Verteilstern, an wenigstens einem Übergabepunkt von diesem zu einem nachfolgenden Teilungsverzugsstern, am Teilungsverzugsstern und/oder stromabwärts von diesem angeordnet. Die Anzahl stromabwärts der Ausleiteinrichtung vorhandener und demzufolge nicht mehr ausleitbarer Flaschen kann dadurch reduziert / minimiert werden, so dass die Füllmaschinen störungsbedingt relativ schnell abgeschaltet werden können.

Vorzugsweise umfasst die Abfüllanlage ferner wenigstens einen Auffangbehälter, der zur Aufnahme mittels der Ausleiteinrichtung ausgeleiteter Flaschen und zur Entleerung von außerhalb eines die Verteileinrichtung und/oder wenigstens eine der Füllmaschinen umfassenden Maschinenschutzbereichs, insbesondere ohne bedienerseitigen Eingriff in diesen, ausgebildet ist. Dies begünstigt einen ununterbrochenen Arbeitsbetrieb des einen Füllers bei gleichzeitiger Störung des anderen Füllers.

Vorzugsweise umfasst die Abfüllanlage ferner einen zentralen Produktverteiler zur Versorgung der Füllmaschinen mit abzufüllendem Produkt aus einem gemeinsamen Produktvorrat, insbesondere Vorratstank, und/oder einen zentralen Verschlusskappenverteiler zur Versorgung von den Füllmaschinen zugeordneten Verschließmaschinen mit Verschlusskappen aus einem gemeinsamen Verschlusskappenvorrat, insbesondere Vorratsbehälter.

Der Produktverteiler ist beispielsweise ein sogenannter Ventilknoten, über den das Produkt zu den einzelnen Füllventilen der Füllmaschinen geleitet wird.

Der Verschlusskappenverteiler ist beispielsweise eine kaskadenförmige Anordnung von Zulaufrinnen, die aus dem Vorratsbehälter zu den Verschließmaschinen führen.

Eine derartige Verteilung von Produkt und/oder Verschlusskappen reduziert den Platzbedarf für den Produktvorrat und Verschlusskappenvorrat und vereinfacht die Bereitstellung und das Auffüllen der jeweiligen Vorräte.

Vorzugsweise umfasst die Abfüllanlage ferner eine Steuereinrichtung zur gemeinsamen Steuerung der Füllmaschinen und/oder zur Steuerungssynchronisierung von an den Füllmaschinen vorhandenen Steuereinheiten. Die Steuerungssynchronisierung umfasst beispielsweise eine sortenspezifische Parameterübergabe insbesondere betreffend ein einheitlich abzufüllendes Produkt. Dies vereinfacht die Steuerung und Bedienung der Füllmaschinen.

Beispielsweise können Sortenparameter von einer Füllmaschine auf die andere übertragen werden, so dass nur eine (gemeinsame) Eingabe oder dergleichen Bedienschritt erforderlich ist. Die Füllmaschinen können nichtsdestoweniger jeweils eine eigenständige Bedieneinheit und/oder Anzeigeeinheit umfassen. Eine daran vorgenommene Eingabe kann dann auf die jeweils andere Füllmaschine dupliziert / gespiegelt angewendet werden.

Eine derartige gemeinsame Steuerung ermöglicht, dass die duplizierten (im Sinne von baugleichen aber gegebenenfalls an ihre Anordnung im Maschinenblock beispielsweise bezüglich anschließender Transfersterne angepassten) Füllmaschinen im Bedienkonzept des Maschinenblocks insgesamt als eine einzige Behandlungseinheit (Füllmaschine) dargestellt und/oder angesprochen werden. Die steuerungstechnische Zuordnung der Etikettierpositionen (Flaschenhalterungen) der Etikettiermaschine und der Füllpositionen (Füllorgane) der Füllmaschinen wird beispielsweise durch Zuordnung entsprechender Schieberegister der jeweiligen Steuereinrichtungen vorgenommen.

Die gemeinsame Steuereinrichtung und/oder die einzelnen Steuereinheiten der Füllmaschinen können beispielsweise in einem gemeinsamen Schaltschrank angeordnet werden.

Die gemeinsame Steuerung der Füllmaschine ermöglicht eine eindeutige Zuordnung der für die jeweilige Flasche verwendeten Blaspositionen (Blasformen), Etikettierpositionen (Flaschenhalterungen) und Füllpositionen (Füllorgane), um eine Rückverfolgbarkeit der befüllten Flaschen durch die Wertschöpfungskette der Abfüllanlage zu ermöglichen. Den Etikettierpositionen kann zudem ein bestimmtes Etikettieraggregat zugeordnet werden, beispielsweise ein erstes Etikettieraggregat den ungeradzahligen Etikettierpositionen und ein zweites Etikettieraggregat den geradzahligen Etikettierpositionen.

Vorzugsweise umfasst die Abfüllanlage, insbesondere die gemeinsame Steuereinrichtung, ein zentrales Basisgerät zur Steuerung der Inspektionstechnik für die Ausläufe beider Transportstränge. Ein derartiges Kontrollsystem kann folgende prinzipiell bekannten Funktionen aufweisen: Vollgutkontrolle für Füllmaschinen und Verschließmaschinen beispielsweise umfassend: Füllhöhenkontrolle (mittels Hochfrequenz-, Infrarot-, Kamera-, Gamma- oder Röntgentechnik); Verschluss- und Sicherungsring-Erkennung (mittels Sensor- und Kameratechnik); Füllmaschinenmanagement; Produktionsmanagement; Qualitätsmanagement; Sicherheitsmanagement; und/oder Verstellung von Führungsgeländern und/oder Inspektionshöhe.

Vorzugsweise umfasst die Abfüllanlage ferner eine Maschinenschutzeinrichtung mit einem gemeinsamen Schutzkreis zur Abschirmung rotierender Baugruppen der Füllmaschinen und insbesondere auch der Verteileinrichtung gegenüber Bedienereingriff. Der gemeinsame Schutzkreis umfasst mehrere Trennvorrichtungen zum Trennen des Schutzkreises, sodass die rotierenden Baugruppen aller Füllmaschinen und gegebenenfalls der Verteileinrichtung bei einer Betriebsstörung und/oder einem versuchten Bedienereingriff gemeinsam angehalten werden. Dadurch lässt sich die Maschinenschutzeinrichtung vergleichsweise einfach aufbauen und steuern.

Es ist aber auch denkbar, für die Füllmaschinen und/oder die Verteileinrichtung getrennte Maschinenschutzeinrichtungen und/oder getrennte Schutzkreise vorzusehen. In diesem Fall wären Trennvorrichtungen zum separaten Trennen der einzelnen Schutzkreise vorzusehen, wie beispielsweise ein eingangsseitiges Trennschott an jeder Füllmaschine und ein eingangsseitiges Trennschott am Eingang zur Verteileinheit. In diesem Falle wäre es beispielsweise möglich, den Eingriff zu einer der Füllmaschinen im Falle einer Betriebsstörung zu ermöglichen, während die andere Füllmaschine weiter produziert und von der Verteileinheit entsprechend beschickt wird. Das heißt, in diesem Falle würde der Eingriffsschutz für die weiter betriebene Füllmaschine und Verteileinrichtung in vollem Umfang aufrechterhalten werden.

Vorzugsweise umfasst die Abfüllanlage ferner einen der Blasmaschine vorgeschalteten Ofen für Vorformlinge mit einem eingangsseitigen Sperrstern zum gesteuerten Freigeben und Blockieren der Zufuhr der Vorformlinge, wobei der Sperrstern mittels eines Schrittmotors drehangetrieben ist. Der Schrittmotor ermöglicht eine taktgenaue Freigabe und Zufuhr einerseits und Blockierung und Zurückhaltung einzelner Vorformlinge andererseits, beispielsweise falls keine oder nur jede zweite Blasposition der Blasmaschine mit einem Vorformling zu besetzen ist.

Durch die präzise Steuerung und Bewegung des Schrittmotors, beispielsweise im Vergleich zu bekannten pneumatischen Sperreinheiten, können die Steuersignale für den Schrittmotor unmittelbar in das jeweilige Maschinenschieberegister eingetragen werden und ermöglichen so eine Steuerung der Zuführung von Vorformlingen ohne Bedarf für zusätzliche Sensorik zur Anwesenheitskontrolle von Vorformlingen oder Flaschen. Zudem entfällt dann der Aufwand zur Einrichtung und Inspektion entsprechender Sensoren, die bisher wegen der relativ hohen Transportgeschwindigkeiten präzise eingestellt und häufig kontrolliert werden mussten.

Die gestellte Aufgabe wird ferner mit einem Verfahren nach Anspruch 13 gelöst. Demnach dient dieses zur Abfüllung flüssiger Produkte, insbesondere Getränke, in Flaschen oder der gleichen Behälter. Die Flaschen werden in einer Blasmaschine hergestellt und als einspuriger Flaschenstrom einer Etikettiermaschine zugeführt, dort an allen umlaufenden Etikettierpositionen etikettiert und dann auf wenigstens einen ersten und zweiten Transportstrang aufgeteilt und in je einer darin eingebundenen Füllmaschine befüllt. Ferner werden die Flaschen von der Herstellung bis zum Befüllen in einem Maschinenblock transportiert und der etikettierte Flaschenstrom bei Transportvollbesetzung derart auf die Transportstränge aufgeteilt, dass die Flaschen an allen umlaufenden Füllpositionen der Füllmaschinen befüllt werden.

Damit lassen sich die bezüglich des Anspruchs 1 beschriebenen Vorteile erzielen.

Die Flaschen können nach einheitlicher Befüllung in den Füllmaschinen, also mit demselben Produkt, wieder zu einem gemeinsam auslaufenden Flaschenstrom zusammengeführt werden.

Bei voneinander hinsichtlich des Produkts abweichender Befüllung in den Füllmaschinen können die Flaschen auch als getrennte Flaschenströme auslaufen.

Vorzugsweise wird eine durch die Aufteilung des einspurigen Flaschenstroms erzeugte erste Transportteilung in den Transportsträngen durch Teilungsverzug auf eine zweite Transportteilung zum Befüllen der Flaschen reduziert.

Vorzugsweise werden die Füllmaschinen bedienerseitig gemeinsam gesteuert durch Eingabe einheitlicher Sortenparameter und deren Anwendung in den Füllmaschinen mittels automatischer Übergabe der Sortenparameter von einer gemeinsamen Steuereinrichtung, insbesondere von einer Füllmaschine zur anderen.

Im Störungsfall einer der Füllmaschinen werden vorzugsweise die dieser zugeordneten Vorformlinge vor ihrer Erwärmung aufgehalten oder danach ausgeschleust, und/oder die dieser zugeordneten Flaschen vor der Etikettierung zwischengespeichert und/oder nach der Etikettierung und vor dem Befüllen aus dem zugehörigen Transportstrang ausgeleitet, wobei in der ordnungsgemäß arbeitenden Füllmaschine wenigstens die bereits hergestellten und/oder etikettierten Flaschen befüllt werden.

Im Störungsfall einer der Füllmaschinen werden dieser zugeordnete Flaschen vorzugsweise aus dem betroffenen Teilstrom stromaufwärts der Füllmaschine und/oder im Bereich eines Verteilsterns zur Aufteilung des Flaschenstroms auf die Teilströme ausgeleitet.

Bevorzugte Ausführungsformen sind zeichnerisch dargestellt. Es zeigen:
- Fig. 1: eine schematische Draufsicht auf die Abfüllanlage gemäß einer ersten Ausführungsform;
- Fig. 2: eine schematische Draufsicht auf eine Verteileinrichtung;
- Fig. 3: eine seitliche Teilansicht eines Aufteilsterns;
- Fig. 4: eine schematische Draufsicht auf die Abfüllanlage gemäß einer zweiten Ausführungsform;
- Fig. 5: eine schematische Draufsicht auf einen Teilbereich der Abfüllanlage gemäß einer dritten Ausführungsform;
- Fig. 6: eine schematische Draufsicht auf einen Teilbereich der Abfüllanlage gemäß einer vierten Ausführungsform;
- Fig. 7: eine schematische Draufsicht auf einen Teilbereich der Abfüllanlage gemäß einer fünften Ausführungsform;
- Fig. 8: eine schematische Draufsicht auf den Einlaufbereich eines Heizmoduls der Abfüllanlage; und
- Fig. 9: eine schematische Draufsicht auf einen Teilbereich der Abfüllanlage gemäß einer sechsten Ausführungsform.

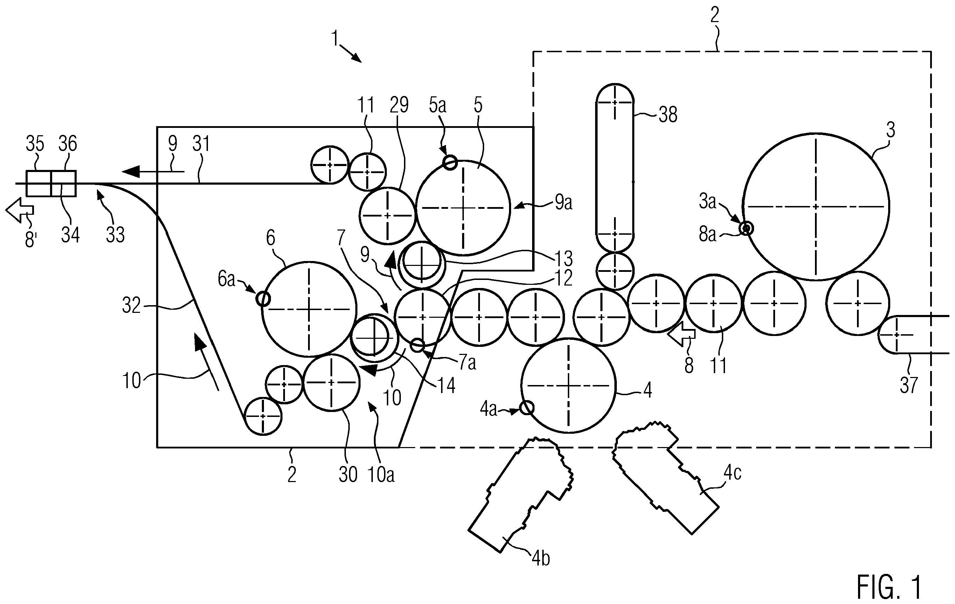

Wie die Fig. 1 erkennen lässt, umfasst die Abfüllanlage 1 gemäß einer ersten vorteilhaften Ausführungsform einen Maschinenblock 2 mit einer Blasmaschine 3, eine dieser nachgeschaltete Etikettiermaschine 4 und zwei Füllmaschinen 5, 6 sowie eine Verteileinrichtung 7 zum Aufteilen eines einspurigen Flaschenstroms 8 auf einen ersten Teilstrom 9 entlang eines ersten Transportstrangs 9a zum ersten Füller 5 und auf einen zweiten Teilstrom 10 entlang eines zweiten Transportstrangs 10a zum zweiten Füller 6.

Der einspurige Flaschenstrom 8 besteht aus in der Blasmaschine 3 an kontinuierlich umlaufenden Blaspositionen 3a hergestellten Flaschen 8a (jeweils nur eine davon dargestellt), die in der Etikettiermaschine 4 an Etikettierpositionen 4a (nur eine davon dargestellt) auf prinzipiell bekannte Weise kontinuierlich umlaufen und dabei von einem ersten oder zweiten Etikettieraggregat 4b, 4c etikettiert werden. Beispielsweise werden Flaschen 8a mit ungerader Ordnungszahl im Flaschenstrom 8 mit dem einen Etikettieraggregat 4b und die Flaschen 8a mit gerader Ordnungszahl im Flaschenstrom 8 mit dem anderen Etikettieraggregat 4c etikettiert. Die Verteileinrichtung 7 umfasst entsprechend kontinuierlich umlaufende Transportpositionen 7a (nur eine davon dargestellt).

Der Maschinenblock 2 zeichnet sich dadurch aus, dass sowohl der einspurige Flaschenstrom 8 als auch die daraus gebildete Teilströme 9, 10 durchweg vereinzelt, also in festgelegtem Abstand zueinander, durch sternförmige Transportmittel 11 wie beispielsweise Transfersterne transportiert werden. Daraus ergibt sich eine miteinander verblockte Bauweise der Blasmaschine 3, der Etikettiermaschine 4, der Füllmaschinen 5, 6 und der Verteileinrichtung 7.

Die Verteileinrichtung 7 umfasst vorzugsweise einen Aufteilstern 12 und vorzugsweise unmittelbar daran anschließend Teilungsverzugssterne 13, 14.

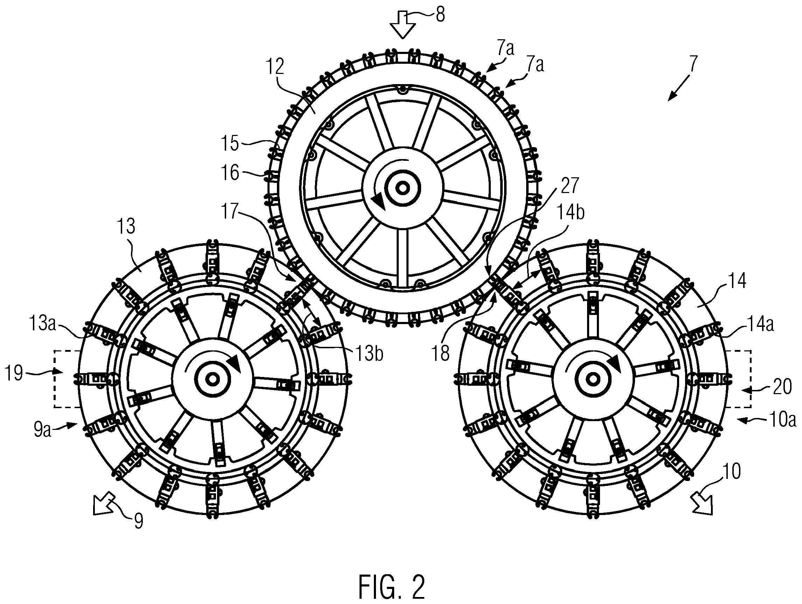

Wie die Fig. 2 diesbezüglich erkennen lässt, umfasst der Aufteilstern 12 vorzugsweise eine Vielzahl umfänglich gleichmäßig daran verteilter erster Klammern 15, die jede zweite Flasche 8a des einspurigen Flaschenstroms 8, beispielsweise Flaschen mit ungerader Ordnungszahl, an den ersten Transportstrang 9a zur Bildung des ersten Teilstroms 9 übergeben, und zweite Klammern 16, die die im Flaschenstrom 8 jeweils dazwischen angeordneten Flaschen 8a, also beispielsweise solche mit gerader Ordnungszahl, an den zweiten Transportstrang 10a zur Bildung des zweiten Teilstroms 10 übergeben. Die Gesamtheit der Klammern 15, 16 entspricht den Transportpositionen 7a der Verteileinrichtung 7 für die Flaschen 8a. Die Teilungsverzugssterne 13, 14 umfassen mit jeder zweiten Transportposition 7a korrespondierende Klammern 13a, 14a.

Wie die Fig. 2 diesbezüglich ferner erkennen lässt, weisen die Teilungsverzugssterne 13, 14 bei der Übergabe der Flaschen 8a eine erste Transportteilung 13b, 14b auf, die der doppelten Transportteilung des Aufteilsterns 12 entspricht in dem Sinne, dass die Klammern 13a des ersten Teilungsverzugssterns 13 den ersten Klammern 15 des Aufteilsterns 12 zugeordnet sind und die Klammern 14a des zweiten Teilungsverzugssterns 14 den zweiten Klammern 16 des Aufteilsterns 12 (oder umgekehrt). Die Teilungsverzugssterne 13, 14 sind dazu ausgebildet, die Transportteilung des ersten und zweiten Teilstroms 9, 10 gegenüber der ersten Transportteilung 13b, 14b auf eine zweite Transportteilung (nicht dargestellt) zu reduzieren, die vorzugsweise der Transportteilung (nicht dargestellt) der Füllpositionen 5a, 6a der Füllmaschinen 5, 6 entspricht.

Die ersten Klammern 15 des Aufteilsterns 12 werden, vorzugsweise wie nachfolgend beschrieben, an einem ersten Übergabepunkt 17 mit dem ersten Teilungsverzugsstern 13 gesteuert geöffnet, die zweiten Klammern 16 des Aufteilsterns 12 entsprechend an einem zweiten Übergabepunkt 18 mit dem zweiten Teilungsverzugsstern 14 und die Flaschen 8a dabei jeweils an die Transportstränge 9a, 10a übergeben.

Schematisch angedeutet sind ferner eine optionale erste Ausleiteinrichtung 19 für den ersten Teilstrom 9 und eine optionale zweite Ausleiteinrichtung 20 für den zweiten Teilstrom 10 zum selektiven Ausleiten von Flaschen 8a aus dem Transportstrang 9a, 10a im Falle einer Betriebsstörung des jeweils zugeordneten Füllers 5, 6. Es wäre auch denkbar, eine Ausleiteinrichtung (in der Fig. 2 nicht dargestellt) zwischen der Etikettiermaschine 4 und der Verteileinrichtung 7 anzuordnen.

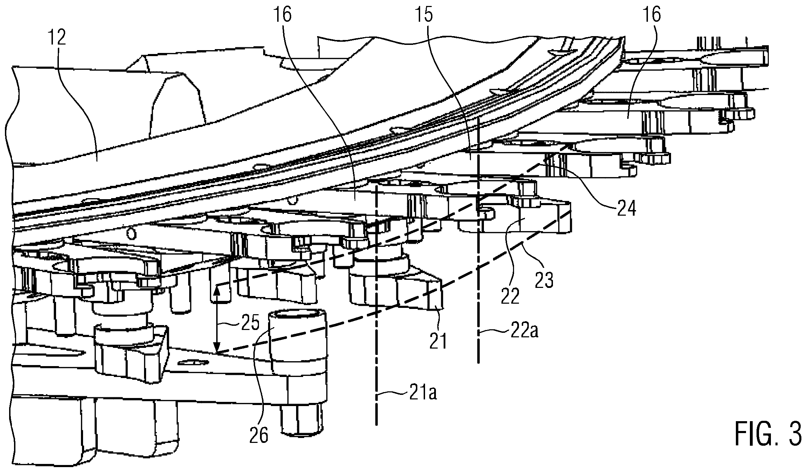

Die Fig. 3 zeigt einen bevorzugten Betätigungsmechanismus für die ersten und zweiten Klammern 15, 16. Demnach umfasst der Aufteilstern 12 jeder ersten Klammer 15 zugeordnet ein erstes umlaufendes Betätigungselement 21 und jeder zweiten Klammer 16 zugeordnet ein umlaufendes zweites Betätigungselement 22. Die Betätigungselemente 21, 22 sind vorzugsweise als um vertikale Achsen 21a, 22a drehbare Drehriegel ausgebildet, deren Drehung (je nach Drehrichtung) die jeweils zugeordnete Klammer 15, 16 öffnet (oder schließt).

Die den ersten Klammern 15 zugeordneten Drehriegel (umlaufende Betätigungselemente 21) sind in einer ersten gemeinsamen Betätigungsebene 23 angeordnet, die den zweiten Klammern 16 zugeordneten Drehriegel (umlaufende Betätigungselemente 22) in einer diesbezüglich nach oben (oder auch nach unten) steuerungstechnisch entkoppelnd versetzten zweiten Betätigungsebene 24.

Darunter ist zu verstehen, dass der Abstand 25 zwischen den Betätigungsebenen 23, 24 so groß ist, dass wenigstens ein in der ersten Betätigungsebene 23 angeordnetes stationäres (nicht umlaufendes) Betätigungselement 26, das beispielsweise als Steuernocken ausgebildet ist, nur die Drehriegel der ersten Betätigungsebene 23 und damit die ersten Klammern 15 betätigt und wenigstens ein in der zweiten Betätigungsebene 24 angeordnetes stationäres Betätigungselement 27 (beispielsweise ein in der Fig. 2 verdeckter Steuernocken) nur die Drehriegel 22 der zweiten Betätigungsebene 23 und damit die zweiten Klammern 16 betätigt.

15, 16 sind am Aufteilstern 12 im Bereich der Übergabepunkte 17, 18 angeordnet. Die stationären Betätigungselemente 26, 27 (Steuernocken) zum Öffnen der Klammern

Ein derartiger Betätigungsmechanismus mit umlaufenden Betätigungselementen 21, 22 und stationären Betätigungselementen 26, 27 ermöglicht eine relativ einfache Konstruktion und eine platzsparende Aufteilung des Flaschenstroms 8. Somit ist ein zuverlässiges Schalten der Klammern 15, 16 im Bereich des jeweiligen Übergabepunkts 17, 18 mit hoher Transportgeschwindigkeit gegeben.

In der Fig. 1 sind den Füllmaschinen 5, 6 jeweils zugeordnete Verschließmaschinen 29, 30 zum Verschließen der Flaschen 8a im jeweiligen Teilstrom 9, 10 zu erkennen sowie diesen mittels Transfersternen 11 nachgeschaltete Teilauslauftransporteure 31, 32, welche im Wesentlichen den auslaufseitigen Abschluss der Transportstränge 9a, 10a ausbilden.

Die Transportstränge 9a, 10a bzw. die Teilauslauftransporteure 31, 32 vereinigen sich an einer (ebenso lediglich schematisch angedeuteten) Zusammenführeinrichtung 33, wie beispielsweise einer Weiche oder dergleichen transporttechnischen Zusammenschluss, zu einem gemeinsamen Auslaufstrom 8' der Flaschen 8a beispielsweise auf einem gemeinsamen Auslauftransporteur 34, der lediglich schematisch angedeutet ist.

Der Auslaufstrom 8' besteht im Normalfall aus den Flaschen 8a des ursprünglich einspurigen Flaschenstroms 8, ist aber demgegenüber vorzugsweise mehrspurig und entsprechend langsamer.

Im Bereich des gemeinsamen Auslauftransporteurs 34 kann beispielsweise ein Ausleittisch 35 angeordnet sein, der beispielsweise der Serviceausleitung von Flaschen 8a aus dem Auslaufstrom 8' dient. Alternativ könnten auch getrennte Ausleittische 35 an jedem der Teilauslauftransporteure 31, 32 vorgesehen sein. An jedem Ausleittisch 35 ist dann beispielsweise ein zugeordneter Auffangbehälter (nicht dargestellt) für ausgeleitete Flaschen 8a vorhanden.

Dem jeweiligen Ausleittisch 35 kann beispielsweise eine Inspektionseinheit 36 zugeordnet sein, hier beispielhaft am gemeinsamen Auslauftransporteur 34 dargestellt. Alternativ können auch getrennte Inspektionseinheiten 36 für den ersten und zweiten Transportstrang 9a, 10a stromabwärts der Verschließmaschinen 29, 30 angeordnet sein. Demgegenüber ermöglicht ein Ausleittisch 35 und eine Inspektionseinheit 36 für den gemeinsamen Auslaufstrom 8' jedoch eine Minimierung des apparativen Aufwands.

Wie die Fig. 1 ferner erkennen lässt, umfasst die Abfüllanlage 1 ferner ein der Blasmaschine 3 eingangsseitig zugeordnetes Heizmodul 37 für Vorformlinge 8b sowie optional einen der Blasmaschine 3 ausgangsseitig zugeordneten Puffertisch 38 zum Zwischenspeichern von Flaschen 8a des einspurigen Flaschenstroms 8.

Der Puffertisch 38 kann beispielsweise dazu verwendet werden, bei einer Betriebsstörung einer der Füllmaschinen 5, 6 die dieser zugeordneten Flaschen 8a vor deren Etikettierung aus dem Flaschenstrom 8 auszuschleusen und für eine spätere Etikettierung und Befüllung zwischenzuspeichern.

Dies ermöglicht beispielsweise, die Blasmaschine 3 und das vorgelagerte Heizmodul 37 leerzufahren, während die einem ordnungsgemäß arbeitenden Füller 5, 6 zugeordneten Flaschen 8a noch etikettiert und im jeweiligen Teilstrom 9, 10 befüllt und verschlossen werden können.

Aufgrund einer Betriebsstörung in einem der Füller 5, 6 nicht befüllbare Flaschen 8a können so noch ordnungsgemäß aus den bereits im Heizmodul 37 und in der Blasmaschine 3 vorhandenen Vorformlingen 8b hergestellt und zur späteren Weiterverarbeitung auf den Puffertisch 38 geschleust werden, um Produktionsausschuss zu minimieren.

Ein Produktionsbetrieb unter Ausschluss eines außer Betrieb genommenen Füllers 5, 6 könnte prinzipiell auch nach vollständiger Verarbeitung der ihm zugeordneten Vorformlinge 8b und der Zwischenspeicherung der daraus hergestellten Flaschen 8a weitergeführt werden.

In diesem Fall wird vorübergehend nur jede zweite Blasposition 3a der Blasmaschine 3 mit einem Vorformling 8b bestückt und die daraus geblasenen Flaschen 8a nur an jeder zweiten Etikettierposition 4a bzw. Transportposition 7a durch die Etikettiermaschine 4 und Verteileinrichtung 7 geführt. Die Flaschen 8a werden dann nur von einem der Etikettieraggregate 4b, 4c etikettiert.

Derartige Betriebsweisen sind Abweichungen vom regulären Produktionsbetrieb, der in der Abfüllanlage 1 nominell bei Transportvollbesetzung erfolgt. Dies bedeutet, dass alle umlaufenden Etikettierpositionen 4a, Transportpositionen 7a der Verteileinrichtung 7 und Füllpositionen 5a, 6a mit einer Flasche 8a bestückt werden.

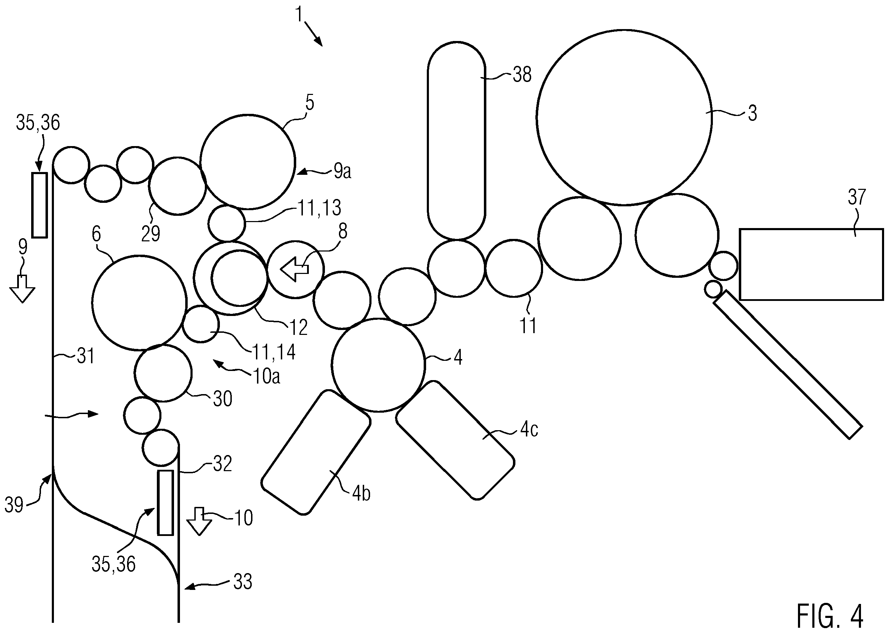

Die Fig. 4 zeigt eine alternative Konfiguration der Abfüllanlage 1, wobei vergleichbare Baugruppen und Maschinen mit entsprechenden Bezugszeichen gekennzeichnet sind und daher nicht nochmals erläutert werden.

In der Fig. 4 ist die Verteileinrichtung 7 mit einem Aufteilstern 12 in Form eines Schiebesterns, Teilungsverzugssterns oder dergleichen schematisch angedeutet. Dies soll bedeuten, dass sich der Teilkreisdurchmesser und/oder die Transportteilung des Aufteilsterns 12 beim Umlauf der Flaschen 8a verändern kann, um den etikettierten Flaschenstrom 8 auf den ersten und zweiten Teilstrom 9, 10 aufzuteilen und dabei beispielsweise eine Kollision von Klammern 15, 16 des Verteilsterns 12 mit jeweils nicht zugeordneten Klammern 13a, 14a anschließender Teilungsverzugssterne 13, 14 oder Transfersterne 11 zu verhindern und/oder bereits einen Teilungsverzug am Aufteilstern 12 vorzunehmen.

Zu diesem Zweck können die Klammern 15, 16 des Aufteilsterns 12 auf geeignete Weise relativ zum Aufteilstern 12 geschwenkt, verschoben und/oder umfänglich, also in oder entgegen ihrer Umlaufrichtung, bewegt werden, um die Flaschen 8a an den Übergabepunkten 17, 18 zu übergeben und dabei Kollisionen zwischen einander nicht zugeordneten Baugruppen zu vermeiden (welche Flaschen 8a am jeweils anderen Übergabepunkt 17, 18 übergeben).

Angedeutet ist in der Fig. 4 ebenso, dass die Ausleittische 35 und die Inspektionseinheiten 36 auch auslaufseitig an den Transportsträngen 9a, 10a ausgebildet sein können.

Ebenso ist angedeutet, dass für die Zusammenführeinrichtung 33 eine Umgehungseinrichtung 39, beispielsweise in Form einer Weiche, vorhanden sein kann, mit der die Zusammenführeinrichtung 33 umgangen und/oder außer Funktion gesetzt werden kann, um die Flaschen 8a aus den Transportsträngen 9a, 10a gezielt als getrennte Teilströme 9, 10 abzutransportieren, beispielsweise bei Abfüllung unterschiedlicher Produkte in den Transportsträngen 9a, 10a. Unter Einbeziehung der Zusammenführeinrichtung 33 bilden die befüllten Flaschen 8a dagegen den gemeinsamen Auslaufstrom 8', was sich bei einheitlicher Befüllung aller Flaschen 8a anbietet.

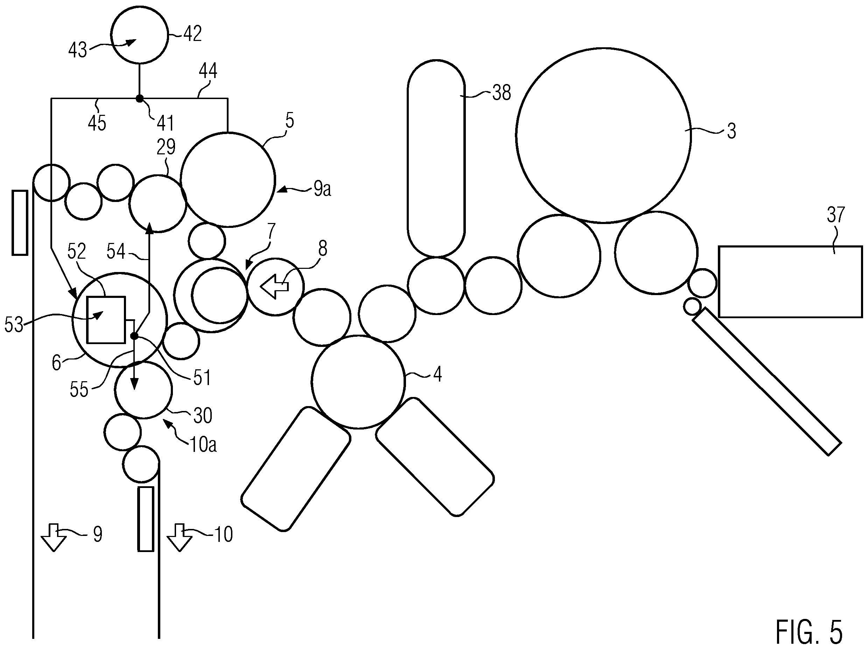

Die Fig. 5 zeigt eine Variante der Abfüllanlage 1 beispielhaft auf der Grundlage der in der Fig. 4 dargestellten Konfiguration, wobei zur Produktversorgung der Füllmaschinen 5, 6 ein Produktverteiler 41 vorhanden ist, der eingangsseitig an einen Produkttank 42 mit einem gemeinsamen Produktvorrat 43 und ausgangsseitig über Versorgungsleitungen 44, 45 an die Füllmaschinen 5, 6 angeschlossen ist. In diesen wird das flüssige Produkt beispielsweise jeweils über einen Ringkanal zu den einzelnen Füllorganen an den Füllpositionen 5a, 6a geleitet.

Der Produktverteiler 41 kann beispielsweise als Ventilknoten für die Füllorgane angesehen werden. Der Produktvorrat 43 kann über den Produktverteiler 41 auch aus anderen zentralen Behältern oder Leitungen vorgehalten werden.

Dargestellt sind in der Fig. 5 ferner die den Füllmaschinen 5, 6 zugeordneten Verschließmaschinen 29, 30 und ein Verschlusskappenverteiler 51, der eingangsseitig an einen Vorratsbehälter 52 mit einem Verschlusskappenvorrat 53 angeschlossen ist. Ausgangsseitig ist der Verschlusskappenverteiler 51 mittels Zuführrinnen 54, 55 an die Verschließmaschinen 29, 30 angeschlossen.

Der Verschlusskappenverteiler 51 kann beispielsweise in eine kaskadenförmige Anordnung der Zuführrinnen 54, 55 integriert sein, die dann mit einem geeigneten Gefälle zum Transport der Verschlusskappen zu den Verschließmaschinen 29, 30 ausgebildet sein.

Mit dem Produktverteiler 41 und/oder dem Verschlusskappenverteiler 51 für die Füllmaschinen 5, 6 lässt sich der apparative Aufwand und der Bedienungsaufwand für das kontinuierliche Bereitstellen des Produktvorrats 43 und des Verschlusskappenvorrats 53 gegenüber einer separaten Bevorratung für die einzelnen Füllmaschinen 5, 6 reduzieren.

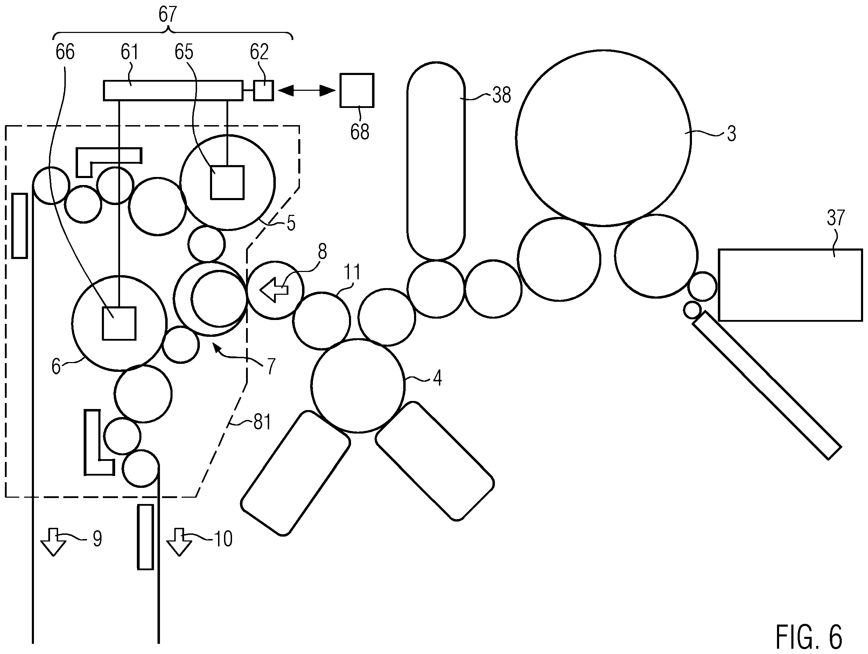

Die Fig. 6 zeigt eine Variante der Abfüllanlage 1 beispielhaft auf der Grundlage der in der Fig. 4 dargestellten Ausführungsform, wonach die Füllmaschinen 5, 6 förderungstechnisch zu einer gemeinsam zu bedienenden Produkteinheit zusammengefasst sind. Beispielhaft und schematisch dargestellt sind eine gemeinsame Steuereinrichtung 61 mit einer Eingabe- und Ausgabeeinheit 62, beispielsweise einem Touchscreen oder dergleichen, und an den Blasmaschinen 5, 6 vorhandene oder diesen an anderer Stelle zugeordnete Steuereinheiten 65, 66. Die Steuereinheiten 65, 66 können beispielsweise auch die den Füllmaschinen 5, 6 zugeordneten Verschließmaschinen 29, 30 auf prinzipiell bekannte Weise steuern.

Die gemeinsame Steuereinrichtung 61 und die ihr untergeordneten Steuereinheiten 65, 66 bilden ein Steuerungsmodul 67 aus, das in einem übergeordneten Steuerungssystem 68 der Abfüllanlage 1 als eine einzige Produktionseinheit eingebunden ist und bedient werden kann.

Somit können die Füllmaschinen 5, 6 insbesondere für die Abfüllung ein und desselben Produkts steuerungstechnisch wie eine einzige Maschine gehandhabt werden und auf einfache Weise an nur einem Eingabe- und Ausgabegerät 62 bedient werden. Dies vereinfacht nicht nur die Bedienung der Füllmaschinen 5, 6, sondern ermöglicht auch eine gemeinsame Speicherung von Sortenparametern in der gemeinsamen Steuereinrichtung 61 und eine einfache Übergabe derartiger Sortenparameter an die Füllmaschinen 5, 6. Das heißt, Bedienungsfehler durch gegebenenfalls unterschiedliche Eingaben für die Füllmaschinen 5, 6 können vermieden und die Zuordnung der Sortenparameter für die Füllmaschinen 5, 6 automatisiert werden.

Prinzipiell wäre es auch denkbar, die gemeinsame Steuereinrichtung 61 in einer der Steuereinheiten 65, 66 zu implementieren und/oder die gemeinsame Steuereinrichtung 61 automatisch derjenigen Steuereinrichtung 65, 66 zuzuordnen, an der aktuell Eingaben insbesondere von Sortenparametern vorgenommen werden.

Sortenparameter können automatisch zwischen den Steuereinheiten 65, 66 der Füllmaschinen 5, 6 übergeben werden. Welches der oben genannten Bedienerkonzepte im jeweiligen Fall von Vorteil ist, hängt beispielsweise von der räumlichen Anordnung der Füllmaschinen 5, 6 im Maschinenblock 2 ab und/oder von der Ausstattung der einzelnen Füllmaschinen 5, 6 mit Eingabe- /Ausgabeeinheiten 62.

Schematisch angedeutet ist in der Fig. 6 zudem ein Maschinenschutzbereich 81 mit einem steuerungstechnisch gemeinsamen Schutzkreis für die Füllmaschinen 5, 6, mit dem ein unzulässiger Bedienereingriff bei laufenden Füllmaschinen 5, 6 unterbunden wird. Wird beispielsweise ein in den Schutzkreis eingebundener Schaltkontakt an einem Eingriffsschutzelement, wie beispielsweise ein Sicherheitsschott, unterbrochen, so werden sämtliche in den Maschinenschutzbereich 81 einbezogenen Maschinen angehalten. Im Beispiel gemäß Fig. 6 wären dies die Füllmaschinen 5, 6, die Verschließmaschinen 29, 30 und die Verteileinrichtung 7.

Ein Maschinenschutzbereich 81 mit gemeinsamem Schutzkreis für die Füllmaschinen 5, 6 ist insbesondere dann vorteilhaft, wenn mit beiden Füllmaschinen 5, 6 dasselbe Produkt abgefüllt werden soll und kein Teillastbetrieb mit nur einem der Transportstränge 9a, 10a während einer Betriebsstörung oder Servicemaßnahme an einer der Füllmaschinen 5, 6 beabsichtigt ist.

Bei einem gemeinsamen Maschinenschutzbereich 81 wäre es auch denkbar, die jeweiligen mechanischen Schutzeinrichtungen, wie beispielsweise Schutztüren, in eine gemeinsame Einhausung für die Füllmaschinen 5, 6, die Verschließmaschinen 29, 30 und gegebenenfalls auch für die Verteileinheit 7 zu integrieren. Diese Maschinen und Baugruppen wären dann in einer gemeinsamen Reinraumumgebung oder dergleichen angeordnet. Nichtsdestoweniger könnten die Füllmaschinen 5, 6 auch mechanisch bzw. räumlich durch entsprechende Trennwände voneinander getrennt werden, um für diese separaten Reinraumumgebungen gegebenenfalls auch mit unterschiedlichen Reinraumklassen auszubilden.

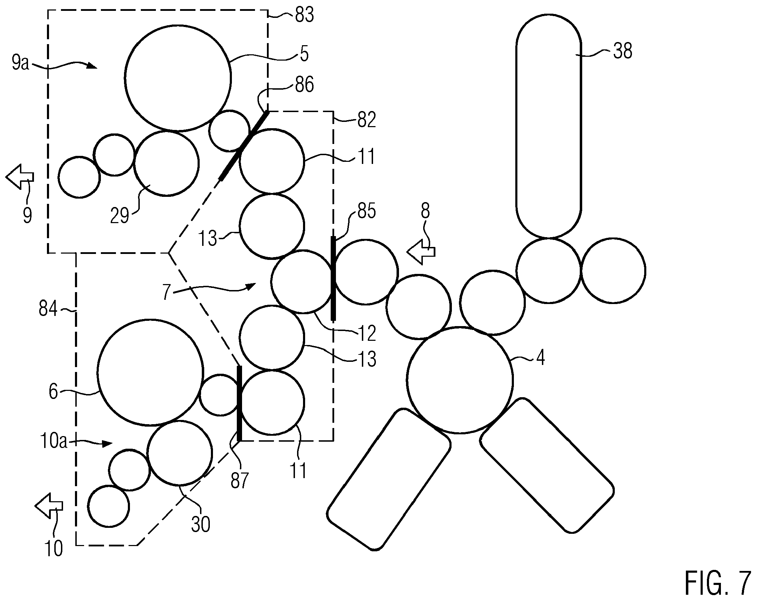

Die Fig. 7 zeigt beispielhaft eine Variante der in der Fig. 4 dargestellten Konfiguration, bei der in den Transportsträngen 9a, 10a zusätzliche Transfersterne 11 vorhanden und beispielhaft separate Maschinenschutzbereiche 82, 83, 84 ausgebildet sind. Die Blasmaschine 3 ist in der Fig. 7 der Einfachheit halber weggelassen.

Demnach ist ein erster Maschinenschutzbereich 82 mit separatem Schutzkreis der Verteileinrichtung 7 zugeordnet, ein zweiter Maschinenschutzbereich 83 mit separatem Schutzkreis der ersten Füllmaschine 5 und ein dritter Maschinenschutzbereich 84 mit separatem Schutzkreis der zweiten Füllmaschine 6. Der erste Maschinenschutzbereich 82 wird eingangsseitig von einem ersten Trennschott 85 begrenzt, der zweite Maschinenschutzbereich 83 eingangsseitig von einem zweiten Trennschott 86 und der dritte Maschinenschutzbereich 84 eingangsseitig von einem dritten Trennschott 87. Die Trennschotts 85, 86, 87 dienen als mechanische Eingriffssicherung und weisen jeweils wenigstens einen Schaltkontakt (nicht dargestellt) auf, der bei Öffnung des jeweiligen Trennschotts 85, 86, 87 den zugeordneten Schutzkreis unterbricht und die zugeordneten rotierenden Baugruppen anhält.

Mit derartig voneinander getrennten Maschinenschutzbereichen 82, 83, 84 können die Füllmaschinen 5, 6 unabhängig voneinander betrieben werden, beispielsweise für einen Teillastbetrieb der Abfüllanlage 1, in dem eine der Füllmaschinen 5, 6 aufgrund einer Betriebsstörung oder Instandhaltungsmaßnahme vorübergehend außer Betrieb ist. Das heißt, die Abfüllanlage 1 kann dann mit reduzierter, beispielsweise halber Leistung im Bereich der nicht unterbrochenen Schutzkreise weiter produzieren.

Die Trennschotts 85, 86, 87 stehen hier beispielhaft für prinzipiell beliebige mechanische Elemente zur Eingriffssicherung, wie beispielsweise Schutztüren an Einhausungen oder dergleichen, sofern entsprechende Schaltkontakte zur Überwachung des Schließzustands der jeweiligen Trennvorrichtung (Trennschott, Schutztür) vorhanden sind.

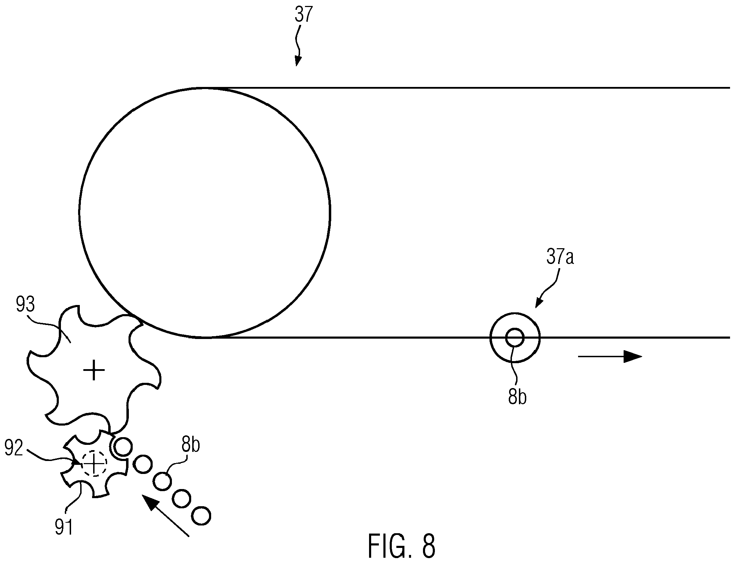

Die Fig. 8 zeigt eine bevorzugte Variante, bei der am Heizmodul 37 eingangsseitig ein Sperrstern 91 vorhanden ist, der von einem Schrittmotor 92 (in Fig. 8 verdeckt) angetrieben wird. Der Sperrstern 91 dient zum maschinell gesteuerten Freigeben und Blockieren der Zuführung der Vorformlinge 8b in das Heizmodul 37. Ebenso kann die Zuführung der Vorformlinge 8b mittels des Schrittmotors 92 derart getaktet werden, dass nur jede zweite umlaufende Heizposition 37a (nur eine davon dargestellt) der Heizeinrichtung 37 mit einem Vorformling 8b bestückt wird und in der Folge ebenso nur jede zweite umlaufende Blasposition 3a der Blasmaschine 3.

Der Sperrstern 91 ist dann vorzugsweise stromaufwärts eines Sägezahnsterns 93 angeordnet, mit dem die Transportteilung der Vorformlinge 8b passend zu den umlaufenden Heizpositionen 37a hergestellt wird.

Der Schrittmotor 92 ermöglicht hierbei eine steuerungstechnisch präzise und einfach zu handhabende Zufuhr der Vorformlinge 8b. Zum einen ist die Zufuhr so mit höherer Geschwindigkeit und Präzision möglich als mit bekannten pneumatischen Sperrvorrichtungen. Zum anderen erübrigt die präzise und steuerungstechnisch zuverlässige Zufuhr der Vorformlinge 8b mittels des Schrittmotors 92 eine Überprüfung der einzelnen umlaufenden Heizpositionen 37a dahingehend, ob diese mit einem Vorformling 8b besetzt sind oder nicht. Das heißt, der Schrittmotor 92 ermöglicht eine derart präzise und zuverlässige Zuführung der Vorformlinge 8b, dass zusätzliche Sensoren zur obigen Kontrolle der Heizpositionen 37a und der damit verbundene Aufwand sowohl apparativ als auch bei der Einrichtung des Heizmoduls 37 entbehrlich sind.

Mit der Abfüllanlage 1 kann beispielsweise wie folgt gearbeitet werden:
Im normalen Produktionsbetrieb werden Sortenparameter vorzugsweise zur Abfüllung eines bestimmten Produkts in beiden Füllmaschinen 5, 6 an der gemeinsamen Steuereinrichtung 61 eingegeben und von dieser an die Steuereinheiten 65, 66 der Füllmaschinen 5, 6 übergeben und dort für den nachfolgenden Produktionsbetrieb bei Transportvollbesetzung angewendet.

Die Sortenparameter können zwischen den Füllmaschinen 5, 6 derart übertragen werden, dass nur eine gemeinsame Eingabe nötig ist.

Hierfür kann / können die gemeinsame Steuereinrichtung 61 und/oder die separaten Steuereinheiten 65, 66 der Füllmaschinen 5, 6 verwendet werden, gegebenenfalls mit gemeinsamer Darstellung oder getrennter Darstellung bezüglich des Steuerungssystems 68 der Abfüllanlage 1 insgesamt.

Ein Schieberegister kann auf die derart duplizierten Füllmaschinen 5, 6 aufgeteilt und die Produktionsdaten der Flaschen 8a der jeweils verwendeten Füllmaschine 5, 6 zugeordnet werden.

Entlang der Produktionskette in der Abfüllanlage 1 ist so eine eindeutige Zuordnung von Blasformen, Etikettieraggregaten und Füllorganen möglich im Sinne einer Rückverfolgbarkeit der Flaschen 8a.

Die Vorformlinge 8b werden kontinuierlich allen Heizpositionen 37a des Heizmoduls 37 zugeführt und der einspurige Flaschenstrom 8 durch Blasen der Flaschen 8a an allen Blaspositionen 3a in der Blasmaschine 3 hergestellt.

Der Flaschenstrom 8 wird kontinuierlich an allen Etikettierpositionen 4a der Etikettiermaschine 4 etikettiert und der Verteileinrichtung 7 zugeführt. Diese verteilt die Flaschen 8a von jeder zweiten Transportposition 7a abwechselnd auf den ersten und zweiten Transportstrang 9a, 10a.

Die Flaschen 8a könnten an einem Umschaltstern durch Zuschalten einer Steuerkurve auch so verteilt werden, dass im Falle einer Störung oder längerfristigen Produktionsunterbrechung an einem Transportstrang 9a, 10a alle Flaschen 8a des Flaschenstroms 8 auf den jeweils nicht gestörten Transportstrang 9a, 10a umgelenkt werden. Die Blasmaschine 3 und die Etikettiermaschine 4 könnten dann bei jeweiliger Transportvollbesetzung mit halber Geschwindigkeit arbeiten.

Unter Transportvollbesetzung wird in den Transportsträngen 9a, 10a die anfängliche Transportteilung 13b, 14b auf die Transportteilung der Füllmaschinen 5, 6 reduziert.

Hierdurch können die Drehzahlen und Transportgeschwindigkeiten nachfolgender Einheiten reduziert werden, um die Problematik eines Überschwappens des eingefüllten Produkts zu minimieren.

Die Teilströme 9, 10 werden in den Füllmaschinen 5, 6 an allen Füllpositionen 5a, 6a befüllt und in den anschließenden Verschließmaschinen 29, 30 verschlossen.

Die befüllten Teilströme 9, 10 werden an der Zusammenführeinrichtung zu einem gemeinsamen Auslaufstrom 8' zusammengefasst, dieser inspiziert und nicht ordnungsgemäße Flaschen 8a daraus ausgeleitet.

Bei Störungen Gezieltes Einbringen jeder zweiten Preform in den Ofen, sodass ein Füller bei Störung des anderen Füllers weiterproduzieren kann.

Auspushen jeder zweiten Preform nach dem Ofen, sodass ein Füller bei Störung des anderen Füllers weiterproduzieren kann.

Im Störungsfall einer der beiden Füllmaschinen 5, 6 kann das Heizmodul 37 leergefahren werden, und dabei produzierte Flaschen 8a werden vorübergehend auf den Puffertisch 38 ausgeschleust und dort zwischengespeichert. Nach der Störungsbehebung wird der Puffertisch 38 vorzugsweise als erstes wieder leergefahren, um danach den normalen Nachschub mit Flaschen 8a im Flaschenstrom 8 nahtlos anzufügen. Der Puffertisch 38 kann auch für Ausleitungen zur Qualitätskontrolle während normaler Produktion genutzt werden.

Geht eine Füllmaschine 5, 6 und/oder eine Verschließmaschine 29, 30 auf Störung, kann der Sperrstern 91 am Einlauf des Heizmoduls 37 angehalten / gesperrt werden. Die dieser Füllmaschine 5, 6 zugeordneten Flaschen 8a und Vorformlinge 8b können dann ausgeschleust werden, während die andere Füllmaschine 5, 6 weiterhin produziert.

Flaschen 8a, die einer Füllmaschine 5, 6 mit Störung zugeordnet sind, sollen ausgeschleust werden, vorzugsweise nach dem Aufteilstern 12. Um Kollisionen zwischen diesem und den nachfolgenden Teilungsverzugssternen 13, 14 zu verhindern, drehen diese vorzugsweise ständig mit. Die Flaschen 8a können dann an einem Teilungsverzugsstern 13, 14 oder an einem Transferstern 11, falls zusätzlich vorhanden, ausgeschleust werden.

Die Abfüllanlage 1 und das Abfüllverfahren wurden anhand einer bevorzugten Aufteilung eines einzigen einspurigen Flaschenstroms 8 auf zwei Teilströme 9, 10 bzw. Transportstränge 9a, 10a beschrieben. Prinzipiell wäre aber auch eine Aufteilung mehrerer Flaschenströme 8 und/oder auf eine größere Anzahl von Teilströmen 9, 10 bzw. Transportsträngen 9a, 10a denkbar, beispielsweise durch Parallelschaltung oder Reihenschaltung von Aufteilsternen 12 und entsprechender Anzahl Flaschen 8a abnehmender Teilungsverzugssterne 13, 14 oder dergleichen.

Der Flaschenstrom 8 besteht aus in der Blasmaschine 3 hergestellten Flaschen 8a aus Kunststoff, insbesondere PET. Denkbar ist aber auch eine entsprechende Aufteilung anderer oder zusätzlicher Flaschen 8a aus wenigstens einem einspurigen Flaschenstrom 8 auf Teilströme 9, 10 in der prinzipiell beschrieben Weise.

Grundlegend hierfür ist stets die Aufteilung des Flaschenstroms 8 bei Transportvollbesetzung unmittelbar vor dem Befüllen der Flaschen 8a, um die beschriebene Aufgabe für das verbesserte Befüllen / Verschließen der Flaschen 8a und/oder deren Handhabung unmittelbar anschließend zu lösen.

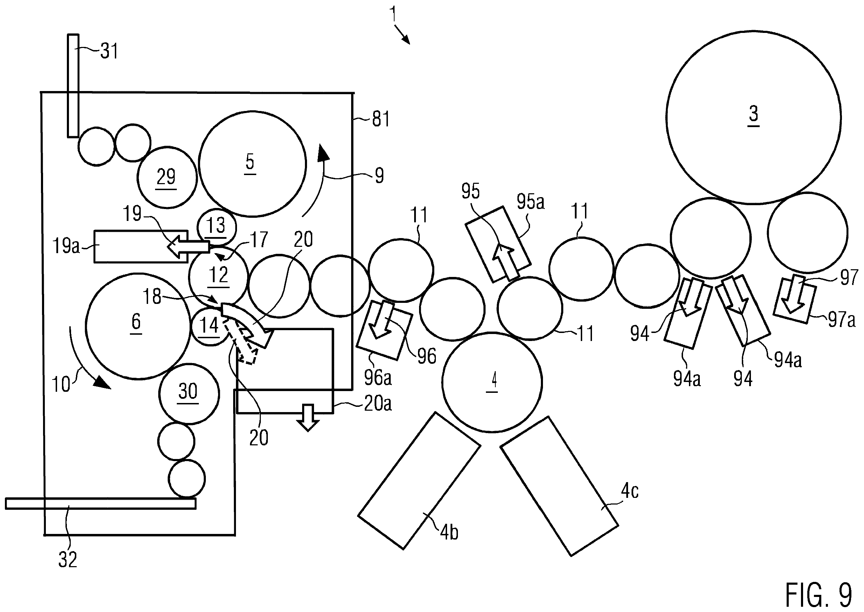

Die Fig. 9 zeigt beispielhaft einen Teilbereich der Abfüllanlage 1 in einer vorteilhaften Variante, die beispielsweise auf wenigstens einer in den Fig. 1 bis 4 dargestellten Konfigurationen basieren kann. Einzelne zugehörige Elemente, wie beispielsweise die Flaschen 8a und die Teilauslauftransporteure 31, 32 sind der Übersichtlichkeit halber gegebenenfalls nicht nochmals dargestellt, bezeichnet und/oder beschrieben. In diesen Fällen wird auf die vorstehende Beschreibung und/oder zugehörige Figuren verwiesen.

Die Ausführungsform gemäß Fig. 9 umfasst demnach eine vorzugsweise jeweils im Bereich der Verteileinrichtung 7 angeordnete erste Ausleiteinrichtung 19 und/oder zweite Ausleiteinrichtung 20 zum jeweils selektiven Ausleiten von Flaschen 8a im Falle einer Betriebsstörung des den jeweiligen Flaschen 8a zugeordneten Füllers 5, 6.

Prinzipiell wäre es auch denkbar, die erste und/oder zweite Ausleiteinrichtung 19, 20 zwischen der Verteileinrichtung 7 und einem der Füller 5, 6 anzuordnen, um Flaschen 8a des jeweiligen Teilstroms 9, 10 gezielt auszuleiten, beispielsweise an einem jeweils zwischengeschalteten Transferstern 11 (siehe hierzu beispielsweise die Anlagenkonfiguration gemäß Fig. 7).

Anders gesagt ist die erste und/oder zweite Ausleiteinrichtung 19, 20 im Bereich der Verteileinrichtung 7 oder stromabwärts davon angeordnet.

Zusätzlich zur ersten und/oder zweiten Ausleiteinrichtung 19, 20 sind ebenso schematisch als Blockpfeile mehrere stromaufwärts der Verteileinrichtung 7 angeordnete Ausleiteinrichtungen 94, 95, 96 für Flaschen 8a und eine Ausleitvorrichtung 97 für Vorformlinge 8b dargestellt.

Für die erste und/oder zweite Ausleiteinrichtung 19, 20 ist eine (durchgezogen gezeichnete) Anordnung im Bereich wenigstens eines Übergabepunkts 17, 18 (Fig. 2) der Verteileinrichtung 7 vorteilhaft, also im Bereich der jeweiligen Flaschenübergabe vom Aufteilstern 12 zum unmittelbar anschließenden ersten oder zweiten Teilungsverzugsstern 13, 14 oder zu einem anderweitigen aktiv greifenden Transferstern 11.

Wie man beispielsweise anhand der Fig. 2 erkennt, können Flaschen 8a dort auf einfache Weise ausgeleitet werden, indem die Klammern 15, 16 des Aufteilsterns 12 auf reguläre Weise geöffnet werden, die Klammern 13a, 14a des anschließenden ersten oder zweiten Teilungsverzugssterns 13, 14 aber infolge entsprechender Steuerung nicht geschlossen werden. Da dies eine Übernahme der auszuleitenden Flaschen 8a verhindert, werden diese stattdessen ausgehend vom jeweiligen Übergabepunkt 17, 18 im Wesentlichen tangential ausgeworfen und können in einen zugeordneten Auffangbehälter 19a, 20a der jeweiligen Ausleiteinrichtung 19, 20 fallen und/oder geleitet werden.

Für die erste und/oder zweite Ausleiteinrichtung 19, 20 wäre auch eine (gestrichelt gezeichnete) Anordnung im Transportbereich des jeweiligen Teilungsverzugssterns 13, 14 denkbar, prinzipiell entsprechend der Darstellung in der Fig. 2. In diesem Fall wären die Klammern 13a, 14a (oder die Klammer eines anderen aktiv greifenden Transferstern 11) an geeigneter Stelle gesteuert zu öffnen, um die am Übergabepunkt 17, 18 regulär übernommenen Flaschen 8a auszuwerfen und dem zugeordneten Auffangbehälter 19a, 20a zuzuführen.

Gesteuerte Betätigungsmechanismen zum derartigen Öffnen der Klammern 13a, 14a und/oder zum Verhindern ihres Schließens an den Übergabepunkten 17, 18 sind prinzipiell, wie anhand der umlaufenden Betätigungselemente 21, 22 und stationären (nicht umlaufenden) Betätigungselemente 26, 27 beschrieben ist, auch an den Teilungsverzugssternen 13, 14 praktikabel, indem nicht umlaufende Betätigungselemente gezielt in eine Stellung gefahren werden, in der die Klammern 13a, 14a zum Ausleiten geöffnet werden oder offen gehalten werden. Hierfür können Aktoren bekannter Bauart vorhanden sein und entsprechend maschinell gesteuert werden.

Für die erste und/oder zweite Ausleiteinrichtung 19, 20 wäre auch eine (nicht dargestellte) Anordnung an einem im jeweils direkt anschließenden Transportstrang 9a, 10a angeordneten passiv greifenden Transferstern 11 denkbar. Von diesem könnten auszuleitende Flaschen 8a durch maschinell entsprechend gesteuerte Stößel abgestoßen werden.

Ein erster Auffangbehälter 19a ist beispielhaft innerhalb eines Maschinenschutzbereichs 81 um die Füllmaschinen 5, 6 und die Verteileinrichtung 7 dargestellt. Eine solche Anordnung ist prinzipiell möglich, erfordert jedoch zum Entleeren des ersten Auffangbehälters 19a einen Eingriff in den Maschinenschutzbereich 81 und somit ein Anhalten aller davon abgesicherten Maschinen. Zudem kann der Zugang für Bedienpersonal aus Platzgründen dort schwierig sein.

Vorteilhaft ist demgegenüber alternativ oder ergänzend wenigstens ein zweiter Auffangbehälter 20a, der ausgeleitete Flaschen 8a innerhalb des Maschinenschutzbereichs 81 aufnehmen kann und dessen Entleerung (schematisch durch einen Blockpfeil angedeutet) von außerhalb des Maschinenschutzbereichs 81 möglich ist.

Vorteilhaft kann es zudem sein, beispielsweise die zweite Ausleiteinrichtung 20 so auszubilden, dass diese sowohl der ersten Füllmaschine 5 als auch der zweiten Füllmaschine 6 zugeordnete Flaschen 8a wahlweise ausleiten kann, je nachdem welche der Füllmaschinen 5, 6 eine Störung aufweist und demzufolge angehalten werden muss.

Hierfür ist zum einen die reguläre Übergabe von beispielsweise dem zweiten Teilstrom 10 zugeordneten Flaschen 8a an den zweiten Teilungsverzugsstern 14 oder stattdessen eine störungsbedingte Ausleitung solcher Flaschen 8a am zweiten Übergabepunkt 18 auf die zuvor beschriebene Weise möglich.

Sollen zum anderen dem ersten Teilstrom 9 zugeordnete Flaschen 8a am zweiten Übergabepunkt 18 störungsbedingt ausgeleitet werden, so verhindert man zunächst deren Übergabe am ersten Übergabepunkt 17 an den ersten Teilungsverzugsstern 13. Zu diesem Zweck steuert man die Verteileinrichtung 7 so, dass dort alle Klammern 15, 16 des Verteilsterns 12 geschlossen und die Klammern 13a des ersten Teilungsverzugsstern 13 geöffnet sind.

Für die demzufolge ausnahmsweise / störungsbedingt am Verteilstern 12 weitertransportierten Flaschen 8a gibt es am zweiten Teilungsverzugsstern 14 keine korrespondierenden Klammern 14a. Werden am zweiten Übergabepunkt 18 alle Klammern 15, 16 des Verteilsterns 12 geöffnet, so werden dort auch die ursprünglich dem ersten Teilstrom 9 zugeordneten und störungsbedingt über den ersten Übergabepunkt 17 hinaus weitertransportierten Flaschen 8a ausgeworfen. Wegen des Fehlens korrespondierender Klammern 14a ist hierfür keine spezielle Steuerung des zweiten Teilungsverzugssterns 14 erforderlich.

Je nach Anordnung der Füllmaschinen 5, 6 ist auch eine prinzipiell entsprechende Ausleitung von ursprünglich dem ersten und/oder zweiten Teilstrom 9, 10 zugeordneten Flaschen 8a am ersten Übergabepunkt 17 denkbar, also durch dortiges Öffnen aller betroffenen Klammern 15, 16.

Am zur derartigen Ausleitung jeweils vorgesehenen Übergabepunkt 17, 18 sind entsprechend stationäre (nicht umlaufende) Betätigungselemente 26, 27, beispielsweise in Form von Steuernocken, zum Öffnen der ersten und zweiten Klammern 15, 16 des Aufteilstern 12 anzuordnen.

Die so ausgeleiteten Flaschen 8a werden vorzugsweise in einem von außerhalb des Maschinenschutzbereichs 81 entleerbaren zweiten Auffangbehälter 20a gesammelt.

Es ist auch denkbar, für die Verteileinrichtung 7 und/oder die Füllmaschinen 5, 6 getrennte Maschinenschutzbereiche 82, 83, 84 auszubilden, wie prinzipiell in der Fig. 7 dargestellt ist. Dort ließen sich sowohl innerhalb eines bestimmten Maschinenschutzbereichs 82, 83, 84 entleerbare Auffangbehälter 19a als auch von außerhalb der Maschinenschutzbereiche 82, 83, 84 entleerbare Auffangbehälter 20a anordnen.

Der wenigstens eine Maschinenschutzbereich 81 bis 84 könnte prinzipiell auch einen hermetischen Abschluss herstellen, um unterschiedliche Atmosphären abzutrennen, beispielsweise einen aseptischen Produktionsbereich innerhalb des Maschinenschutzbereich 81 bis 84 gegenüber einem Außenbereich mit geringeren atmosphärischen Anforderungen. Der von außen dann gegebenenfalls über eine Schleuse entleerbare zweite Auffangbehälter 20a wäre angesichts von üblichen aseptischen Produktionszyklen von meist über 100 Stunden und zugehörigen mehrstündigen Reinigungszyklen besonders vorteilhaft, um Produktionsunterbrechungen zu minimieren.

Wie die Fig. 9 zudem erkennen lässt, sind vorzugsweise ferner wenigstens eine dritte Ausleiteinrichtung 94 für Flaschen 8a am Auslauf der Blasmaschine 3, eine vierte Ausleiteinrichtung 95 für Flaschen 8a am Einlauf zur Etikettiermaschine 4, eine fünfte Ausleiteinrichtung 96 für Flaschen 8a am Auslauf der Etikettiermaschine 4 und/oder eine Ausleiteinrichtung 97 für Vorformlinge 8b am Einlauf zur Blasmaschine 3 vorhanden. Auch den Ausleiteinrichtungen 94 bis 97 sind dann (schematisch angedeutete) Auffangbehälter 94a, 95a, 96a und 97a für ausgeleitete Flaschen 8a bzw. Vorformlinge 8b zugeordnet.

Stromaufwärts der Verteileinrichtung 7 über den Transportweg der Vorformlinge 8b und Flaschen 8a verteilte Ausleiteinrichtungen 94 bis 97 verkürzen die Transportwege und -zeiten bis zur jeweiligen Ausleitung. Ferner können Flaschen 8a dann auf mehrere Auffangbehälter 19a, 20a und 94a bis 96a verteilt werden. Dies kann bei begrenztem Platzangebot und Zugang sowie bei großen Flaschenformaten vorteilhaft sein, um die relativ große Anzahl im Störungsfall auszuleitender Flaschen 8a geeignet handhaben zu können und Produktionsausschuss zu minimieren.

Zudem kann es wünschenswert sein, nur möglichst wenige Flaschen 8a in den Maschinenschutzbereich 81 bis 84 laufen zu lassen, da die Handhabung der dort ausgeleiteten Flaschen 8a je nach Anordnung der Auffangbehälter 19a, 20a aufwändiger und der Zugang zu diesen eingeschränkt sein kann.

Entsprechend vorteilhaft ist eine gemeinsame Ausleiteinrichtung 20 für beide Füllmaschinen 5, 6 mit einem von außerhalb des Maschinenschutzbereichs 81 bis 83 zugänglichen Auffangbehälter 20a, so dass nicht in den Maschinenschutzbereich 81 bis 83 eingegriffen werden muss und die nicht gestörte Füllmaschine 5, 6 weiterlaufen kann.

Innerhalb des Maschinenschutzbereichs 81 bis 84 ist eine Ausleitung der Flaschen 8a prinzipiell möglichst nahe vor den Füllmaschinen 5, 6 vorteilhaft, da dann die Anzahl der stromabwärts noch bis zur jeweils gestörten Füllmaschine 5, 6 zu transportierenden (nicht ausleitbaren) Flaschen 8a miniert und die betroffene Füllmaschine 5, 6 möglichst unverzüglich angehalten werden kann.

An aktiv greifenden Sternen, beispielsweise am Verteilstern 12 und/oder den Teilungsverzugssternen 13, 14, angeordnete Ausleiteinrichtungen 19, 20, 94 bis 97 umfassen beispielsweise die beschriebenen umlaufenden Betätigungselemente 21, 22 und die nicht umlaufenden (statischen) Betätigungselemente 26, 27, welche dann zwischen einer mit den umlaufenden Betätigungselementen 21, 22 zusammenwirkenden aktiven Stellung und einer entsprechend inaktiven Stellung maschinell gesteuert hin- und her bewegt werden können.

An passiv greifenden Sternen, beispielsweise an einfachen Transfersternen 11, angeordnete Ausleiteinrichtungen 19, 20, 94 bis 97 umfassen vorzugsweise Stößel (Pusher), die einzelne Flaschen 8a oder Vorformlinge 8b aus den sie tragenden Klammern stoßen. Aufgrund der zahlreichen und relativ schnellen repetitiven Schaltvorgänge zum Ausstoßen jeder zweiten Flasche 8a (im Bereich der Etikettiermaschine 4 beispielsweise über 100 Flaschen 8a pro Störungsfall), eignen sich für die Stößel besonders elektrische Servo-Direktantriebe, alternativ auch Kurbelwellenantriebe mit linear oszillierenden Stößeln. Auch pneumatische Antriebe wären je nach geforderten Schaltzyklen zum Ausleiten von Flaschen 8a und/oder Vorformlingen 8b prinzipiell möglich.

Die erforderliche Synchronisierung der Ausleiteinrichtungen 19, 20, 94 bis 97 ist beispielsweise im Rahmen des beschriebenen Steuerungssystems 68 mit der gemeinsamen Steuereinrichtung 61 und/oder den einzelnen Steuereinheiten 65, 66 der Füllmaschinen 5, 6 und/oder weiteren Steuerungskomponenten durch prinzipiell bekannte Programmierung möglich.

## Patentansprüche

1. Abfüllanlage (1) für flüssige Produkte, umfassend:
- einen Maschinenblock (2) mit einer Blasmaschine (3) zur Herstellung von Flaschen und zu deren Bereitstellung als Flaschenstrom (8), mit einer nachgeschalteten Etikettiermaschine (4) zur Etikettierung des Flaschenstroms, mit wenigstens einem ersten und zweiten Transportstrang (9a, 10a) umfassend je eine Füllmaschine (5, 6) zum Befüllen der Flaschen, und mit einer Verteileileinheit (7) zur Aufteilung des etikettierten Flaschenstroms auf die Transportstränge bei Transportvollbesetzung derart, dass die Flaschen an allen umlaufenden Etikettierpositionen (4a) der Etikettiermaschine etikettiert und gleichzeitig an allen umlaufenden Füllpositionen (5a, 6a) der Füllmaschinen befüllt werden können; und
- den Füllmaschinen jeweils nachgeschaltete Teilauslauftransporteure (31, 32) mit einer Zusammenführeinrichtung (33) zum Zusammenführen der Transportstränge zu einem gemeinsamen Auslauftransporteur (34).

2. Abfüllanlage nach Anspruch 1, ferner mit einer Umgehungseinrichtung (39) zum selektiven Umgehen oder Inhibieren der Zusammenführeinrichtung (33), um getrennte Ausläufe für die Transportstränge (9a, 10a) bereitzustellen.

3. Abfüllanlage nach Anspruch 1 oder 2, wobei die Verteileinrichtung (7) einen Aufteilstern (12) umfasst zur abwechselnden Übergabe jeder zweiten Flasche (8a) des Flaschenstroms (8) an den ersten und zweiten Transportstrang (9a, 10a).

4. Abfüllanlage nach Anspruch 3, wobei der Aufteilstern (12) mittels daran umlaufender Betätigungselemente (21, 22) und zugeordneter stationärer Betätigungselemente (26, 27) aktiv zu öffnende Klammern (15, 16) umfasst, und wobei die dem ersten Transportstrang (9a) zugeordneten Betätigungselemente (21, 26) auf einer ersten gemeinsamen Betätigungsebene (23) und die dem zweiten Transportstrang (10a) zugeordneten Betätigungselemente (22, 27) auf einer zweiten gemeinsamen Betätigungsebene (24) oberhalb oder unterhalb der ersten Betätigungsebene zur bezüglich der Betätigungsebenen voneinander unabhängigen Betätigung der Klammern angeordnet sind.

5. Abfüllanlage nach wenigstens einem der vorigen Ansprüche, wobei die Transportstränge (9a, 10a) jeweils wenigstens einen Teilungsverzugsstern (13, 14) umfassen zur Reduzierung einer ersten Transportteilung (13b, 14b) bei der Aufteilung des Flaschenstroms (8) auf eine demgegenüber kleinere zweite Transportteilung beim Befüllen der Flaschen (8a).

6. Abfüllanlage nach einem der vorigen Ansprüche, wobei der Maschinenblock (2) ferner einen zwischen Blasmaschine (3) und Etikettiermaschine (4) infolge maschineller Steuerung wahlweise abzweigenden Puffertisch (38) für den Flaschenstrom (8) umfasst.

7. Abfüllanlage nach wenigstens einem der vorigen Ansprüche, wobei der Maschinenblock (2) ferner wenigstens eine an der Verteileinrichtung (7) und/oder zwischen dieser und einer der Füllmaschinen (5, 6) angeordnete Ausleiteinrichtung (19, 20) umfasst, die derart ausgebildet und maschinell gesteuerten ist, dass der einen oder anderen Füllmaschine (5, 6) zugeordnete Flaschen (8a) jeweils selektiv ausgeleitet werden können.

8. Abfüllanlage nach Anspruch 7, ferner mit wenigstens einem Auffangbehälter (20a), der zur Aufnahme mittels der Ausleiteinrichtung (20) ausgeleiteter Flaschen (8a) und zur Entleerung von außerhalb eines die Verteileinrichtung (7) und/oder wenigstens eine der Füllmaschinen (5, 6) umfassenden Maschinenschutzbereichs (81-83), insbesondere ohne bedienerseitigen Eingriff in diesen, ausgebildet ist.

9. Abfüllanlage nach wenigstens einem der vorigen Ansprüche, ferner mit einem zentralen Produktverteiler (41) zur Versorgung der Füllmaschinen (5, 6) mit abzufüllendem Produkt aus einem gemeinsamen Produktvorrat (43) und/oder und einem zentralen Verschlusskappenverteiler (51) zur Versorgung von den Füllmaschinen zugeordneten Verschließmaschinen (29, 30) mit Verschlusskappen aus einem gemeinsamen Vorratsbehälter (52).

10. Abfüllanlage nach wenigstens einem der vorigen Ansprüche, ferner mit einer Steuereinrichtung (61) zur gemeinsamen Steuerung der Füllmaschinen (5, 6) und/oder zur Synchronisierung / Parameterübergabe zwischen Steuereinheiten (65, 66) zur separaten Steuerung der Füllmaschinen.

11. Abfüllanlage nach wenigstens einem der vorigen Ansprüche, ferner mit einer Maschinenschutzeinrichtung mit einem Maschinenschutzbereich (81) zur gemeinsamen Abschirmung rotierender Baugruppen der Füllmaschinen (5, 6) und insbesondere der Verteileinrichtung gegenüber Bedienereingriff.

12. Abfüllanlage nach wenigstens einem der vorigen Ansprüche, ferner umfassend ein der Blasmaschine vorgeschaltetes Heizmodul (37) für Vorformlinge (8b) mit einem eingangsseitigen Sperrstern (91) zum gesteuerten Freigeben und Blockieren der Zufuhr der Vorformlinge, wobei der Sperrstern mittels eines Schrittmotors (92) angetrieben ist.

13. Verfahren zur Abfüllung flüssiger Produkte in Flaschen (8a), wobei die Flaschen in einer Blasmaschine (3) hergestellt und als einspuriger Flaschenstrom (8) einer Etikettiermaschine (4) zugeführt und dort an allen umlaufenden Etikettierpositionen (4a) etikettiert werden, wobei der Flaschenstrom danach auf wenigstens einen ersten und zweiten Teilstrom (9, 10) aufgeteilt wird und jeder Teilstrom in einer separat zugeordneten Füllmaschine (5, 6) befüllt wird, wobei die Flaschen von der Herstellung bis zum Befüllen in einem Maschinenblock (2) transportiert werden und der etikettierte Flaschenstrom bei Transportvollbesetzung derart auf die Teilströme aufgeteilt wird, dass die Flaschen an allen umlaufenden Füllpositionen (5a, 6a) der Füllmaschinen befüllt werden.

14. Verfahren nach Anspruch 13, wobei die Teilströme (9, 10) bei einheitlicher Befüllung der Flaschen mit demselben Produkt zu einem gemeinsamen Auslaufstrom (8') zusammengeführt werden und insbesondere die Teilströme bei voneinander hinsichtlich des Produkts abweichender Befüllung in den Füllmaschinen (5, 6) getrennt abtransportiert werden.

15. Verfahren nach Anspruch 13 oder 14, wobei die Transportteilung (13b, 14b) der Teilströme (9, 10) vor dem Befüllen durch Teilungsverzug während umlaufenden Transports der Flaschen (8a) reduziert wird.

16. Verfahren nach einem der Ansprüche 13 bis 15, wobei die Füllmaschinen (5, 6) bedienerseitig gemeinsam gesteuert werden durch Eingabe einheitlicher Sortenparameter und deren Anwendung durch automatische Übergabe an die Füllmaschinen von einer gemeinsamen Steuereinrichtung (61), insbesondere von einer Füllmaschine an die andere.

17. Verfahren nach einem der Ansprüche 13 bis 16, wobei im Störungsfall einer der Füllmaschinen (5, 6) dieser zugeordnete Vorformlinge (8b) maschinell aufgehalten oder ausgeschleust werden, dieser zugeordnete Flaschen (8a) vor der Etikettierung zwischengespeichert und/oder vor der gestörten Füllmaschine aus dem betroffenen Teilstrom (9, 10) ausgeleitet werden, und wobei bereits hergestellte / etikettierte Flaschen in der ordnungsgemäß arbeitenden Füllmaschine befüllt werden.

18. Verfahren nach einem der Ansprüche 13 bis 17, wobei im Störungsfall einer der Füllmaschinen (5, 6) dieser zugeordnete Flaschen (8a) aus dem betroffenen Teilstrom (9, 10) stromaufwärts und/oder im Bereich eines Verteilsterns (12) zur Aufteilung des Flaschenstroms auf die Teilströme (9, 10) ausgeleitet wird.
